Europäisches Patentamt

European Patent Office

Office européen des brevets

(19)

(11) EP 0 704 345 B1

(12) **FASCICULE DE BREVET EUROPEEN**

(45) Date de publication et mention
de la délivrance du brevet:
**29.12.1999 Bulletin 1999/52**

(51) Int. Cl.⁶: **B60R 16/02**

(21) Numéro de dépôt: **95402179.6**

(22) Date de dépôt: **28.09.1995**

(54) **Contacteur électrique tournant perfectionné autorisant une pose/dépose aisée**

Elektrischer Drehschalter mit erleichterter Montage/Demontage

Electrical rotating connector with facilitated mounting/unmounting

(84) Etats contractants désignés:
**DE ES FR GB IT**

(30) Priorité: **30.09.1994 FR 9411762**
**16.12.1994 FR 9415191**

(43) Date de publication de la demande:
**03.04.1996 Bulletin 1996/14**

(73) Titulaire: **SC2N**
**78180 Montigny-le-Bretonneux (FR)**

(72) Inventeur: **Hallet, Michel**
**F-14320 Clinchamps, Orne (FR)**

(74) Mandataire: **Texier, Christian**
**Cabinet Regimbeau,**
**26, Avenue Kléber**
**75116 Paris (FR)**

(56) Documents cités:
**EP-A- 0 525 839            WO-A-91/17592**
**US-A- 5 246 377**

# Description

La présente invention concerne le domaine des contacteurs électriques tournants.

Plus précisément, la présente invention concerne les contacteurs du type comprenant :

- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci.

La présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

La présente invention a maintenant pour but de perfectionner les contacteurs électriques tournants connus.

Un but de la présente invention est en particulier de proposer un nouveau contacteur électrique tournant qui permette de faciliter le processus de mise en place lors du montage sur véhicule. Un autre but important de la présente invention est de proposer un nouveau contacteur électrique tournant pour véhicule automobile, qui autorise une pose et une dépose aisée du volant, sans orientation précise des roues.

Ce but est atteint dans le cadre de la présente invention grâce à un contacteur du type comprenant deux éléments susceptibles de rotation relative et un conducteur souple placé entre ces deux éléments, caractérisé par le fait que les deux éléments sont munis de moyens de verrouillage élastiques complémentaires sollicités en prise, au repos, pour verrouiller les deux éléments en position relative quelconque, et adaptés pour être déverrouillés automatiquement lors de la mise en place du contacteur sur son site afin de libérer automatiquement les deux éléments lors de la mise en place du contacteur.

Selon une autre caractéristique avantageuse de l'invention, ces moyens de verrouillage élastiques complémentaires comprennent des encoches équiréparties autour de l'axe de rotation relative sur l'un des deux éléments et au moins une languette élastique sur l'autre élément ou comprennent des languettes élastiques équiréparties autour de l'axe de rotation relative sur l'un des deux éléments et au moins une encoche sur l'autre élément.

Selon un mode de réalisation préférentiel, l'un premier des éléments comprend une couronne d'encoches réparties autour de l'axe de rotation relative des deux éléments, tandis que le second élément comprend au moins une languette élastique sollicitée élastiquement au repos vers ladite couronne d'encoches prévues sur le premier élément pour verrouiller en position relative les deux éléments, tout en étant adaptée pour être sollicitée en éloignement de cette couronne d'encoches lors de la mise en place du contacteur sur son site d'utilisation, afin de libérer automatiquement ces deux éléments lors de la mise en place du contacteur.

Selon une autre caractéristique avantageuse de la présente invention, ladite languette est adaptée pour supprimer le jeu entre l'élément qui la porte et l'organe associé qui reçoit celui-ci sur le site d'utilisation, par exemple le volant du véhicule automobile.

D'autres caractéristiques, buts et avantages de la présente invention apparaîtront à la lecture de la description détaillée qui va suivre, et en regard des dessins annexés donnés à titre d'exemples non limitatifs et sur lesquels :

- la figure 1 représente une première vue schématique en perspective d'un contacteur électrique conforme à la présente invention,
- la figure 2 représente une seconde vue schématique en perspective du même contacteur,
- la figure 3 représente une vue axiale de détail du contacteur conforme à la présente invention et illustre la coopération définie entre des languettes élastiques et la couronne d'encoches,
- la figure 4 représente une vue axiale d'un couvercle rotatif du contacteur conforme à la présente invention, muni de languettes élastiques,
- les figures 5, 6 et 7 représentent des vues agrandies de détail du contacteur conforme à la présente invention et illustrent plus précisément la coopération définie entre les languettes et les encoches,
- la figure 8 représente une vue axiale similaire à la figure 3 dans une seconde position angulaire des languettes élastiques par rapport aux encoches,

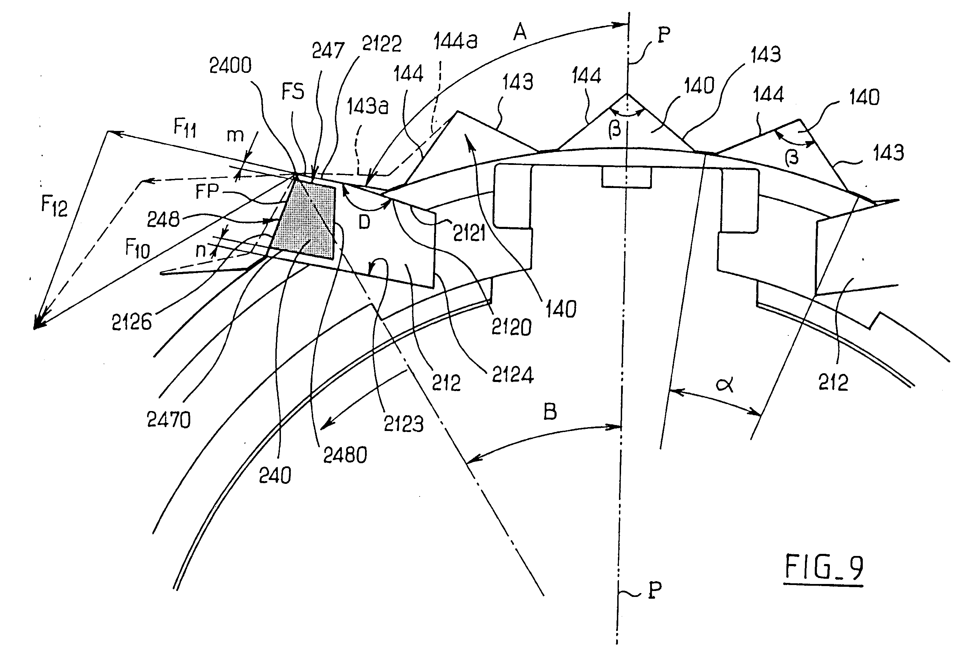

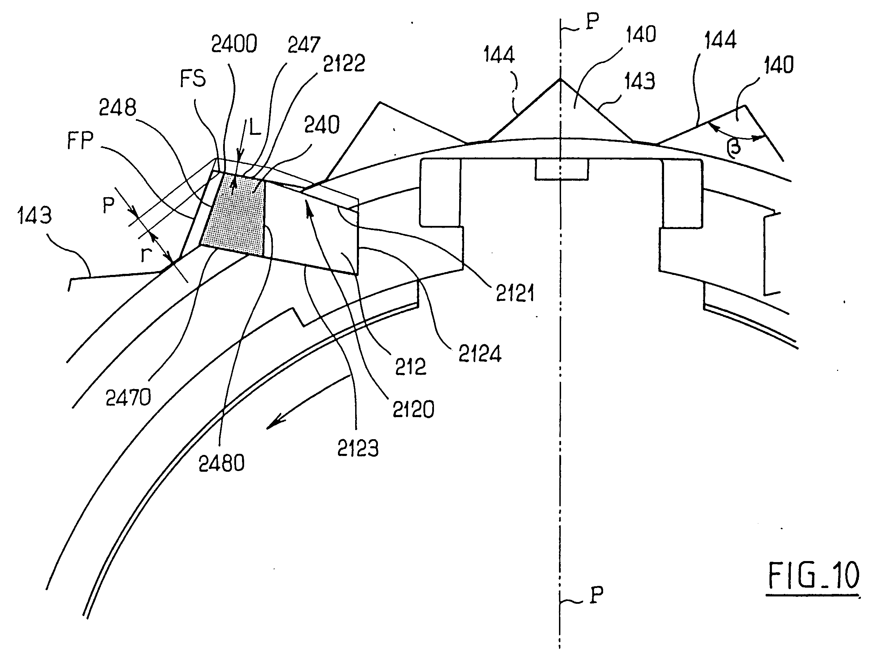

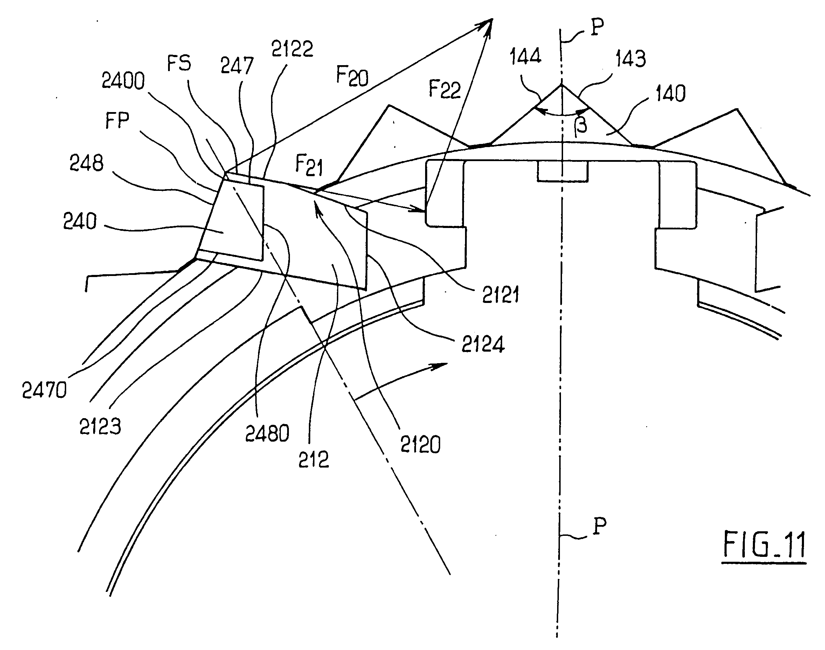

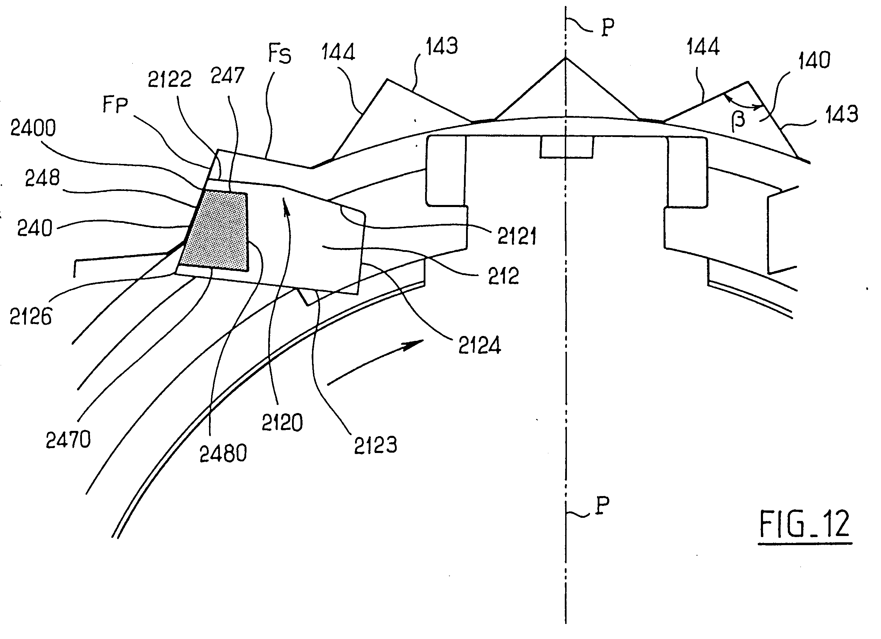

- les figures 9, 10, 11 et 12 représentent une vue partielle, illustrant la coopération entre les languettes élastiques et la couronne d'encoches, d'un contacteur électrique tournant conforme à une variante de réalisation de la présente invention, plus précisément les figures 9 et 10 illustrent la coopération entre les languettes élastiques et les encoches lorsque l'élément qui porte les encoches est sollicité à rotation dans un premier sens par rapport à l'élément qui porte les languettes élastiques, tandis que les figures 11 et 12 représentent la coopération définie entre ces languettes élastiques et encoches lorsque les éléments précités sont sollicités à rotation dans le sens opposé,

- la figure 13 illustre la position de languettes lors d'un déverrouillage contrôlé, dans le cadre de cette variante, et
- la figure 14 illustre schématiquement le déplacement d'une languette dans sa lumière.

Le contacteur électrique tournant représenté sur les figures annexées comprend essentiellement, un boîtier fixe 100, un couvercle rotatif 200 et un conducteur électrique souple 300.

L'axe de rotation relative du boîtier 100 et du couvercle 200 est référencé O-O.

Le boîtier fixe 100 peut faire l'objet de nombreux modes de réalisation.

De préférence, tout comme le couvercle rotatif 200, le boîtier fixe 100 est réalisé par moulage en matière plastique.

Selon le mode de réalisation particulier et non limitatif représenté sur les figures annexées, le boîtier 100 comprend essentiellement deux parois circulaires concentriques 110, 112 reliées entre elles par une paroi de base 114 en forme de couronne. Les parois 110, 112 et 114 précitées délimitent ainsi une chambre annulaire 116 apte à contenir le conducteur 300.

La paroi cylindrique externe 110 est pourvue de préférence de points de fixation 120 formés par exemple d'oeillets comme représenté sur les figures annexées.

En outre, la paroi cylindrique extérieure 110 est munie, de préférence sur sa périphérie extérieure, d'un corps de connecteur 130.

Le corps de connecteur 130 peut comprendre des contacts électriques conçus pour être reliés respectivement à une extrémité des pistes du conducteur souple 300 ou encore être adapté pour recevoir une extrémité de ce conducteur souple 300.

Le corps de connecteur 130 s'étend avantageusement axialement, c'est-à-dire dans une direction générale parallèle à l'axe des parois 110, 112.

Le couvercle 200 peut également faire l'objet de nombreux modes de réalisation. Selon le mode de réalisation particulier représenté sur les figures annexées, et non limitatif, le couvercle 200 comprend essentiellement une paroi de base 210 plane en forme de couronne, coaxiale au boîtier 100. La paroi 210 est munie sur sa périphérie interne d'un fût cylindrique 220 ou de différents segments cylindriques équi-répartis autour de son axe, comme représenté sur les figures annexées. Ce fût 220 ou les secteurs composant celui-ci sont engagés dans l'espace interne du boîtier 100. Ainsi, le couvercle 200 est monté et guidé à rotation sur le boîtier 100.

Le couvercle 200 est retenu à translation sur le boîtier 100 par tout moyen approprié, par exemple à l'aide de dents 222 en saillie sur l'extrémité du fût 220 ou des segments composants ce fût 220, lesquelles dents 222 viennent en prise avec la paroi cylindrique interne 112 du boîtier.

De préférence, le couvercle 210 est muni également d'un corps de connecteur 230, avantageusement au niveau de sa périphérie interne, sur sa face opposée au fût 220. Le corps de connecteur 230 s'étend dans une direction axiale, c'est-à-dire parallèlement à l'axe du couvercle 200 et du boîtier 100.

Ce corps de connecteur 230 est également muni de contacts électriquement conducteurs adaptés pour venir en liaison avec la seconde extrémité des pistes respectives du conducteur souple 300, ou encore le corps de connecteur 230 est adapté pour recevoir la seconde extrémité de ce conducteur 300.

A l'utilisation, le couvercle pivotant 200 est relié par tout moyen approprié, à rotation, avec le volant du véhicule automobile, tandis que le boîtier 100 est fixé sur un organe fixe du véhicule, par exemple la colonne de direction, ou en variante, inversement, le boîtier 100 peut être fixé sur le volant, tandis que le couvercle 200 est alors relié par tout moyen approprié, à rotation, à l'organe fixe du véhicule, par exemple la colonne de direction.

Le conducteur souple 300 peut également faire l'objet de nombreux modes de réalisation. Il peut s'agir par exemple d'un faisceau de fils électriquement conducteurs isolés, ou encore de préférence d'un circuit imprimé ou d'un film plastique souple pourvu de plusieurs pistes métallisées parallèles.

Comme on l'a mentionné précédemment, dans le cadre de la présente invention, de préférence, l'un premier des deux éléments 100, 200 comprend une couronne d'encoches 140 réparties autour de l'axe O-O de rotation relative des deux éléments 100, 200, et le second élément comprend au moins une languette élastique 240 sollicitée au repos contre les encoches 140 pour verrouiller le boîtier 100 et le couvercle 200, et adaptée pour être sollicitée à déplacement en éloignement des encoches 140, lors de la mise en place du contacteur sur son site d'utilisation pour déverrouiller alors le boiter 100 et le couvercle 200.

Plus précisément selon le mode de réalisation préférentiel de la présente invention représenté sur les figures annexées, il est ainsi prévu deux languettes élastiques 240 sur le corps de connecteur 230 du couvercle pivotant 200.

Plus précisément encore, selon le mode de réalisation représenté sur les figures annexées, le corps de connecteur 230 comprend un bloc venu de moulage avec le couvercle 200 sur la périphérie interne de la paroi de base en couronne 210 composant celui-ci. Ce bloc formant le corps de connecteur 230 présente une symétrie par rapport à un plan axial, c'est à dire un plan passant par l'axe du couvercle 200. Ce plan est référencé P-P sur les figures annexées. Ce bloc a ainsi la forme générale d'une lame disposée tangentiellement par rapport à la périphérie interne de la couronne 210.

Les deux languettes 240 sont venues de moulage respectivement sur les flancs du corps de connecteur 230.

Les languettes 240 s'étendent dans une direction générale axiale, c'est à dire sensiblement parallèlement à l'axe du couvercle 200.

Les languettes 240 peuvent faire l'objet de nombreux modes de réalisation. Selon le mode de réalisation particulier et non limitatif représenté sur les figures annexées, chaque languette 240 présente une section trapézoïdale adaptée à la géométrie des encoches 140, considérée dans un plan perpendiculaire à l'axe O-O. Plus précisément chaque languette 240 possède deux faces externes principales 247, 248 qui coopèrent avec les encoches 140. Selon le mode de réalisation particulier et non limitatif représenté sur les figures annexées deux de ces faces externes 247, respectivement de chaque languette 240, sont coplanaires entre elles et orthogonales au plan de symétrie axial P-P, passant par l'axe O-O, des languettes 240. Les deux autres faces externes 248 des languettes sont également symétriques par rapport au plan de symétrie P-P des languettes 240 et forment un angle obtus, par exemple de l'ordre de 120°, par rapport aux surfaces précitées 247. Chaque languette 240 se raccorde sur le sommet du corps de connecteur 230 opposé à la paroi de base 210 par l'intermédiaire d'une zone d'articulation venue de matière, 242, de faible largeur.

Par ailleurs les languettes 240 ont une longueur supérieure à celle du corps de connecteur 230.

Les languettes 240 traversent, libres de déplacement, la plaque de base 210 du couvercle 200, au niveau de lumières 212 formées dans celle-ci.

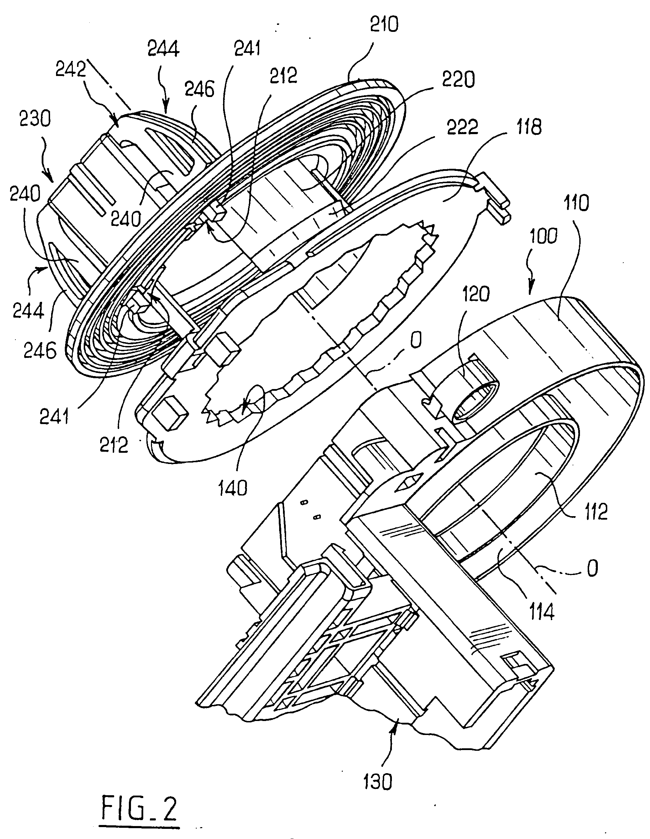

Ainsi les languettes 240 s'étendent au delà de la plaque de base 210, vers le boîtier 100, comme on le voit par exemple sur la figure 2. Sur cette figure 2, les extrémités libres des languettes 240 qui émergent par rapport à la paroi de base 210 sont référencées 241.

De plus les languettes 240 sont de préférence munies chacune sur leur face latérale opposée au plan de symétrie P-P du corps de connecteur 230 d'une rampe de sollicitation 244.

Cette rampe de sollicitation 244 diverge de préférence par rapport au plan de symétrie P-P du corps de connecteur 230 en rapprochement de la plaque de base 210.

Comme on l'expliquera par la suite, ces rampes 244 sont adaptées pour être sollicitées par le volant lors de la mise en place du contacteur.

On peut prévoir pour celà par exemple sur le volant, une structure annulaire, dont le rayon interne est compris entre le rayon minimal et le rayon maximal, par rapport à l'axe du couvercle 200, des rampes précitées 244.

Selon le mode de réalisation non limitatif représenté sur les figures annexées ces rampes 244 sont formées de nervures 246 venues de moulage sur les flancs des languettes 240.

Par ailleurs le boîtier 100 est muni de la couronne d'encoches aptes à recevoir au repos les extrémités 241 des languettes 240. Les encoches 140 sont adaptées pour interdire au repos toute rotation relative entre le couvercle 200 et le boîtier 100.

Les encoches 140 peuvent être formées sur l'ensemble 100 précité composé des parois 110, 112 et 114 ou encore sur tout sous-ensemble lié à ce boîtier 100, par exemple sur une pièce annulaire 118 liée à ce boîtier 100 pour obturer au moins partiellement le contour d'ouverture de la chambre 116.

Selon le mode de réalisation particulier et non limitatif représenté sur les figures annexées, il est ainsi prévu 24 encoches 140 possédant chacune une ouverture angulaire α de 15°, équiréparties sur la périphérie interne de la pièce 118.

Les encoches 140 sont adaptées pour autoriser un déplacement des languettes 240, de sorte que après déformation de celles-ci lors de la pose du contacteur, ces languettes 240 n'interfèrent plus avec les encoches 140, ni la pièce 118.

De préférence chaque encoche 140 a la forme d'un dièdre et comprend deux surfaces ou flancs, plans, 143, 144. L'inclinaison relative β entre ces flancs 143, 144 est de préférence égale à l'inclinaison entre les surfaces externes principales 247, 248 des languettes, soit préférentiellement supérieure à 90° par exemple de l'ordre de 120°, et leur positionnement est adapté de sorte qu'au repos, les languettes symétriques 240 puissent coopérer avec des encoches 140 respectives quelconques.

De plus, ces flancs 143, 144 sont symétriques par rapport à un plan axial passant par l'axe O-O.

Lors de l'assemblage initial du contacteur, les extrémités 241 des languettes 240 sont placées contre les encoches 140. Plus précisément les faces externes 248 des deux languettes 240 sont rappelées élastiquement au repos respectivement vers les surfaces 143 et 144 de deux encoches 140 symétriques par rapport au plan de symétrie P-P, par les zones d'articulation 242. La coopération ainsi définie entre les languettes 240 et les encoches 140 interdit par conséquent toute rotation entre le couvercle 200 et le boîtier 100.

De préférence cet assemblage initial verrouillé est opéré en position milieu du contacteur, c'est à dire en position médiane de la course relative autorisée entre le couvercle 200 et le boîtier 100. Cette disposition, qui correspond à une pose du contacteur, lorsque les roues du véhicule sont parallèles à l'axe longitudinal du chassis, permet de garantir le fonctionnement du contacteur par la suite.

Généralement le contacteur ainsi assemblé est fixé sur le sommet de la colonne de direction, par son boîtier 100 est les points d'ancrage 120.

Lors de la mise en place du volant, la structure annulaire précitée prévue sur celui-ci vient solliciter les rampes 244, en exerçant sur celles-ci un effort F transversal à l'axe O-O et au plan P-P, dirigé vers ce dernier. Par conséquent les languettes 240 sont déformées élastiquement en rapprochement, de sorte que les languettes 240 échappent aux encoches 140. Le couvercle 200 est alors rendu libre de pivotement par rapport au boîtier 100.

On notera également que les languettes 240 ainsi déformées élastiquement et sollicitées par la structure annulaire prévue sur le volant permettent de supprimer tour jeu entre le volant et le couvercle 200 et par conséquent de réduire le bruit de fonctionnement du contacteur.

La structure des rampes 244 est adaptée pour permettre une sollicitation des languettes 240 par la structure annulaire liée au volant, et par conséquent un déverrouillage de ces languettes 240, dans une large plage de positionnement axial du volant.

Lors d'un démontage ultérieur du volant (voire du contacteur) les roues directrices du véhicule étant dans une position quelconque de braquage, le couvercle 200 de l'appareil se trouve angulairement décalé (du rapport de direction) par rapport au boîtier 100. Les languettes 240 sont automatiquement libérées de la contrainte F et reviennent dans leur position repos de verrouillage sur deux encoches respectives 140, comme représenté sur la figure 18.

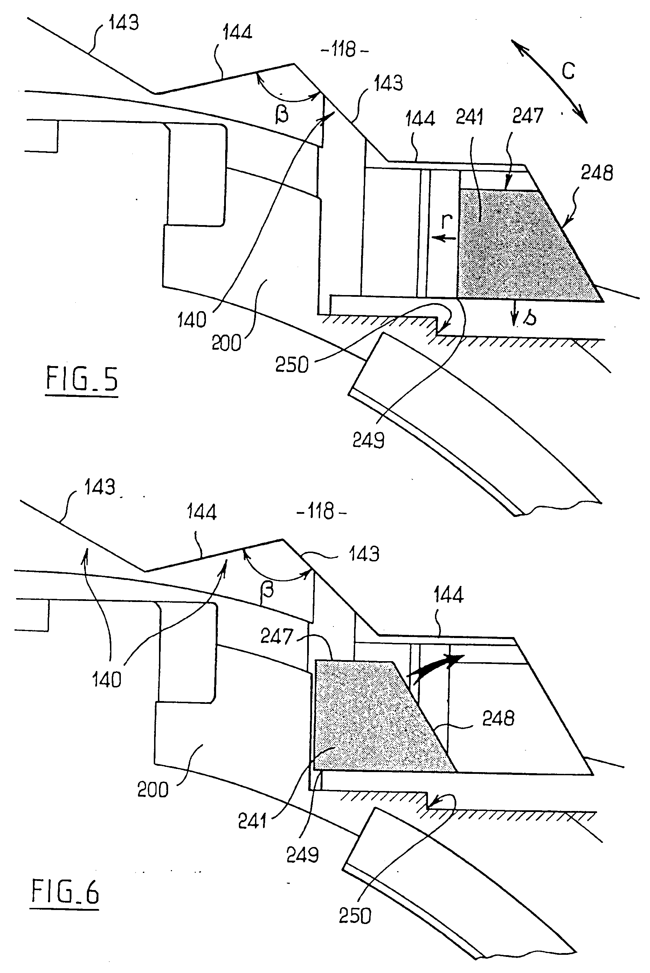

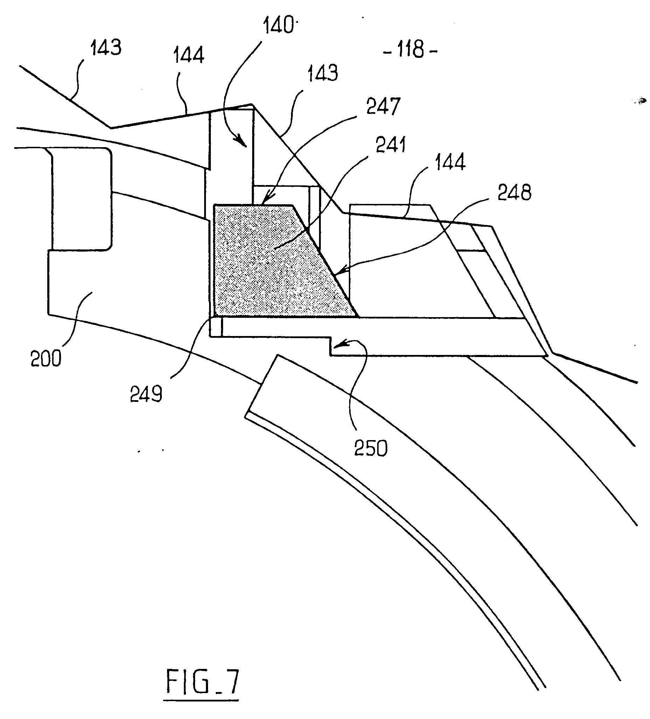

Les languettes 240 s'engagent ou sur un flanc 143 ou sur un flanc 144 des encoches 140 reverrouillant ainsi l'appareil dans une position de précision ± 1/2 encoche (soit dans l'exemple précité 7,5°) comme on le comprend à l'examen comparé des figures 6 et 7.

Au remontage du volant (voir de l'appareil) le contacteur se trouve déverrouillé à nouveau automatiquement au pire dans une position décalée de 1/2 encoche (soit 7,5° dans l'exemple précité non limitatif).

Bien entendu la longueur du conducteur souple 300 et les éventuelles butées de course doivent être adaptées pour permettre ce décalage et de préférence autoriser même plusieurs démontages/remontages.

On notera que du fait de leur ouverture β importante, préférentiellement supérieure à 90°, les encoches 140 génèrent des composantes r et s (voir figure 5) sur les languettes 240, tendant à déverrouiller le contacteur, lorsqu'un couple de rotation relative C est appliqué entre le boîtier 100 et le couvercle 200, en position verrouillée de ceux-ci.

Pour éviter un déverrouillage intempestif du contacteur sous l'effet de cette contrainte C, on peut prévoir, sur le couvercle 200 qui porte les languettes 240, un cran 250 situé radialement en regard de l'angle interne 249 de chaque languette 240. Les crans 250 ont de préférence la même ouverture angulaire que ces angles internes 249. Ainsi les crans 250 servent de butée aux languettes 240, lorsque celles-ci tendent à être déplacées radialement vers l'intérieur par ladite contrainte C.

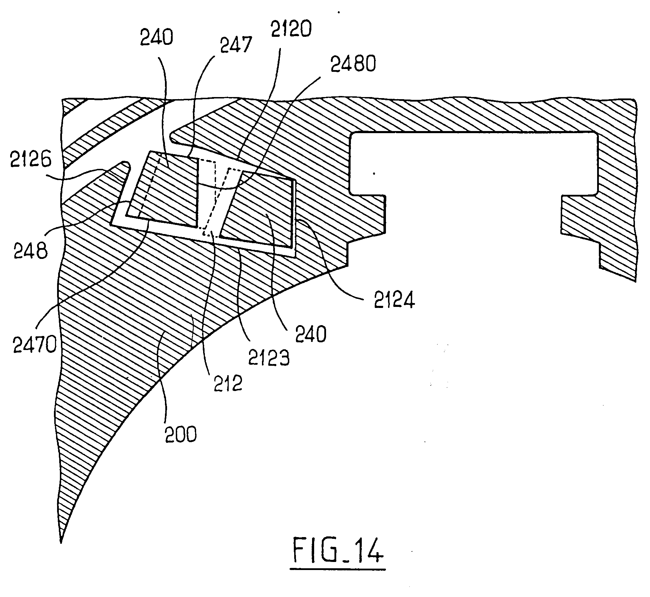

On va maintenant décrire la variante de réalisation représentée partiellement sur les figures 9 à 14 annexées.

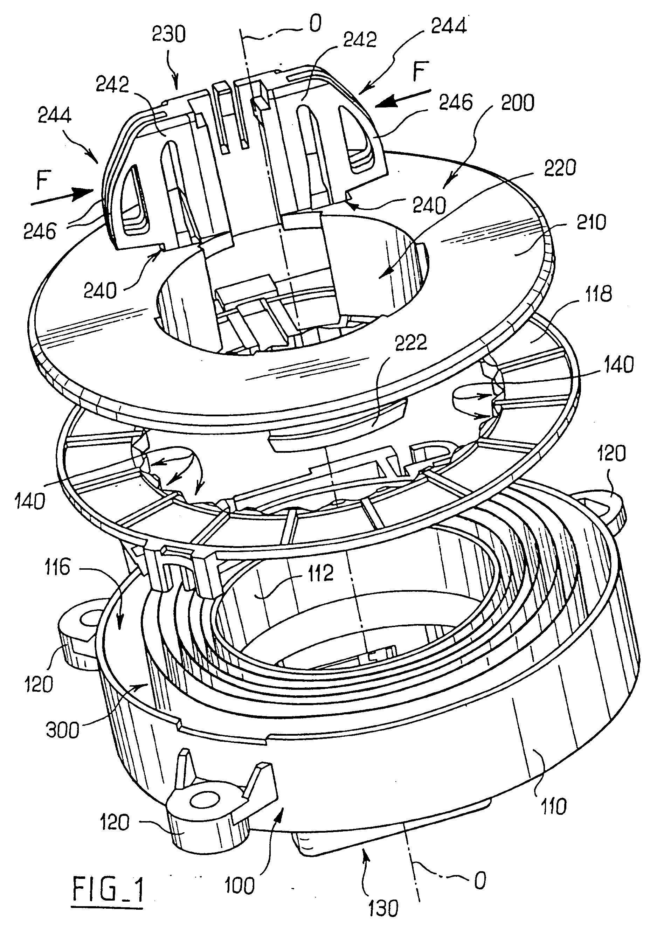

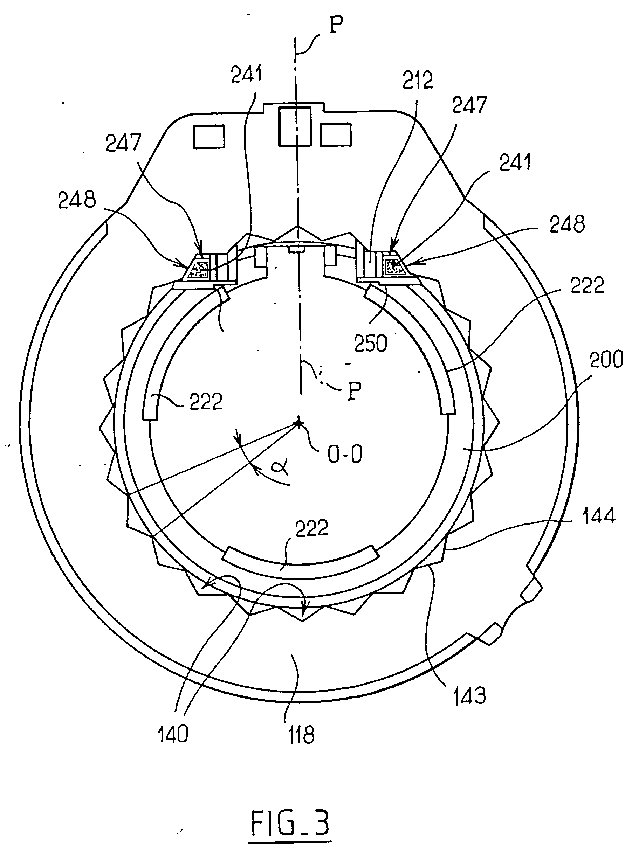

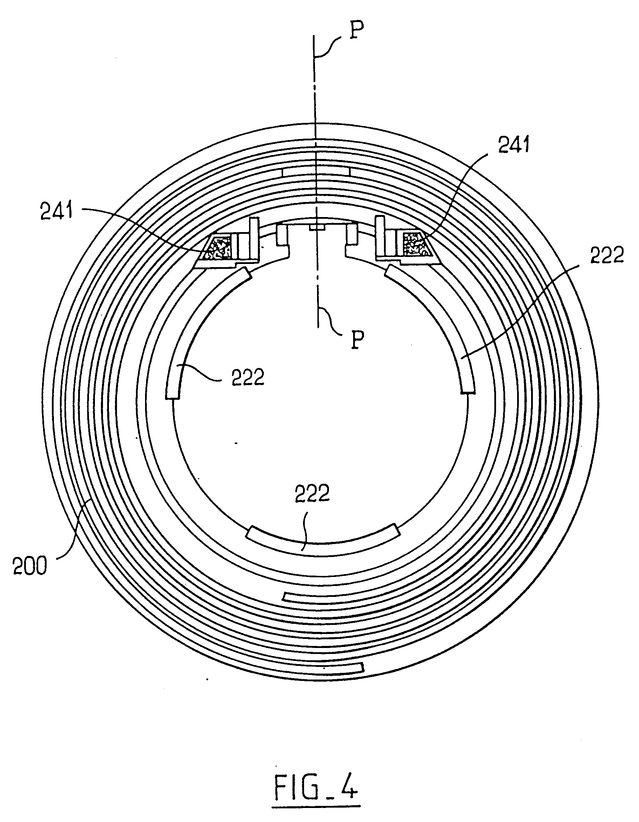

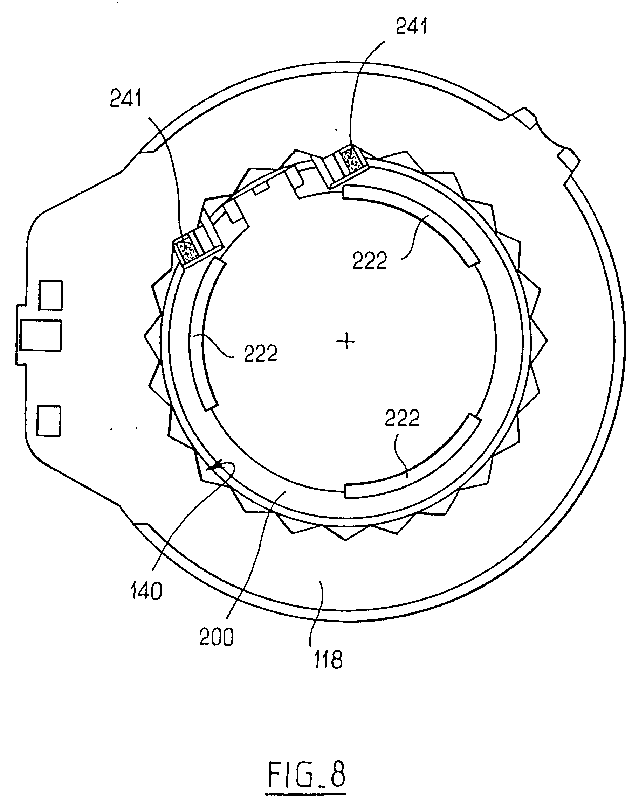

Cette variante de réalisation de contacteur conforme à l'invention reprend la même structure générale que décrite précédemment en regard des figures 1 à 8, à savoir comprenant un boîter fixe 100, un couvercle rotatif 200 et un conducteur électrique souple 300. L'un du boîtier 100 ou du couvercle 200 comprend une couronne d'encoches 140 tandis que l'autre du couvercle 200 ou du boîtier 100 comprend deux languettes élastiques 240.

La variante de réalisation représentée sur les figures 9 et suivantes se distingue essentiellement du premier mode de réalisation illustré sur les figures 1 à 8 par la géométrie de ces encoches 140 et languettes 240.

Par conséquent, par la suite, on s'attachera essentiellement à décrire ces languettes 240 et encoches 140 conformes à la variante de réalisation.

Le but de la variante représentée sur les figures 9 et suivantes est de perfectionner le verrouillage, en position démontée du contacteur. En d'autres termes cette variante a pour but d'éviter que la position relative entre le boîtier 100 et le couvercle 200, définie en principe par l'indexation des languettes 240 dans les encoches 140, ne soit modifiée par déformation des languettes 240, échappant alors aux encoches 140, si un couple supérieur à un seuil admissible est appliqué entre le boîtier 100 et le couvercle 200.

On retrouve sur les figures 9 et suivantes, une couronne d'encoches 140 formées chacune d'un dièdre composé de deux flancs plans 143, 144, ainsi que des languettes élastiques 240 de section droite généralement trapézoïdale. Les deux facettes, radialement les plus externes de ces languettes 240, qui reposent contre les flancs 143, 144 des encoches 140, sont référencées 248, 247 sur les figures 9 et suivantes.

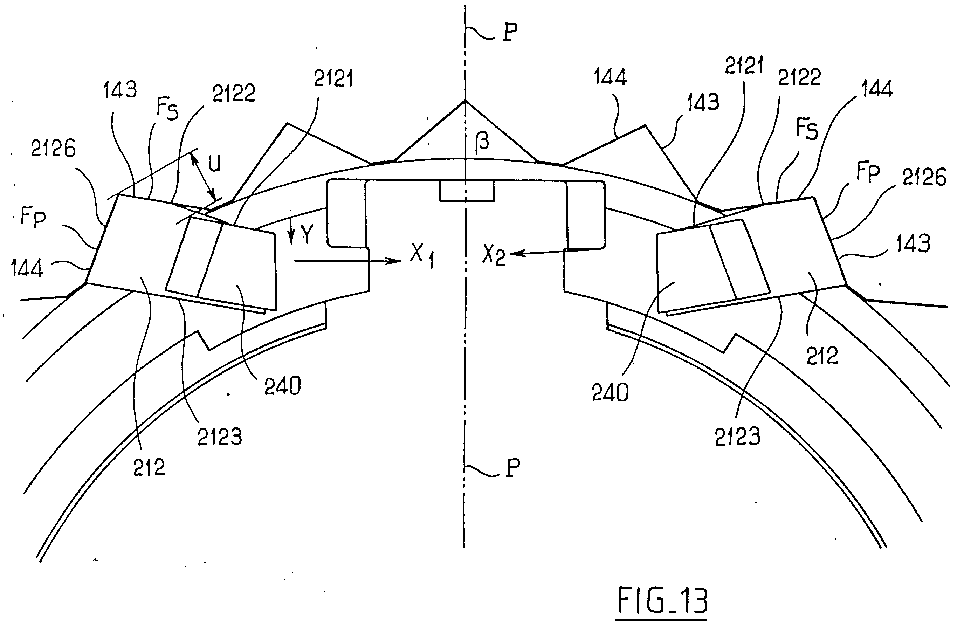

Pour simplifier l'exposé qui suit, les flancs 143, 144 de l'encoche 140 qui reçoit une languette 240 seront appelés flanc principal FP, pour le flanc dirigé vers le plan de symétrie P-P, et flanc secondaire FS, pour le flanc généralement transversal à ce plan de symétrie P-P. Les flancs 143, 144 jouent alternativement le rôle du flanc principal FP et de flanc secondaire FS. Ainsi pour l'encoche 140 recevant la languette 240 représentée sur les figures 9 à 12, le flanc 143 sert de flanc secondaire FS, tandis que le flanc 144 sert de flanc principal FP. A l'inverse, pour l'encoche 140 recevant l'autre languette 240, le flanc 143 sert de flanc principal FP, tandis que le flanc 144 sert de flanc secondaire FS, comme on le voit sur la figure 13.

Cependant, par rapport au premier mode de réalisation représenté sur les figures 1 à 8, selon la variante de réalisation représentée sur les figures 9 et suivantes, l'angle β d'ouverture de chaque encoche 140 est réduit de sorte que les flancs secondaires FS des deux encoches 140 recevant respectivement les languettes 240, ne soient plus coplanaires, comme cela était le cas sur les figures 1 à 8, mais soient inclinés par rapport au plan de symétrie P-P, d'un angle A différent de 90°.

Plus précisément, ces flancs secondaires FS convergent vers l'axe de rotation O-O en rapprochement du plan de symétrie P-P.

En d'autres termes les deux flancs secondaires FS définissent entre eux un angle obtus, 2A, inférieur à 180°, ouvert radialement vers l'extérieur.

Les deux flancs 143, 144 de chaque encoche 140 sont toujours symétriques par rapport à un plan axial passant par l'axe O-O pour permettre un verrouillage satisfaisant des deux languettes 240 dans l'une quelconque des paires d'encoches 140 symétriques du plan P-P.

Selon le mode de réalisation préférentiel représenté sur les figures 9 et suivants, l'angle β d'inclinaison relative des deux flancs 143, 144 de chaque encoche 140 est de l'ordre de 100°, alors qu'il était de 120° selon le mode de réalisation des figures 1 à 8. On notera que sur la figure 9 on a esquissé en traits interrompus, sous la référence 143a, 144a, l'inclinaison des flancs de chaque encoche 140 selon le mode de réalisation des figures 1 à 8.

Plus précisément encore, selon le mode de réalisation des figures 9 et suivantes, il est prévu 24 encoches 140 présentant chacune, par rapport à l'axe de rotation O-O une ouverture α de 15°.

Le sommet du dièdre ou encoche 140 recevant une languette 240 fait, par rapport au plan de symétrie P-P, en référence à l'axe de rotation O-O, un angle B égal à un multiple de la demi-ouverture de chaque encoche 140. Selon le mode de réalisation particulier représenté sur les figures 9 et suivantes, cet angle B est de 30°.

Selon une caractéristique avantageuse de l'invention l'angle A entre le flanc secondaire FS de l'encoche 140 recevant une languette 240 et le plan de symétrie P-P est compris entre 60 et 85°, préférentiellement entre 70 et 80°, très préférentiellement de l'ordre de 78°.

Les languettes 240 ont de préférence une section droite trapézoïdale définie par quatre facettes planes 247, 248, 2470, 2480.

Les deux facettes radialement externes 247, 248 des languettes 240 sont inclinées entre elles d'un angle égal à l'ouverture β défini entre les flancs 143, 144 de chaque encoche 140. Ainsi les facettes externes 247, 248 sont de préférence inclinées entre elles de 100° et, respectivement par rapport au plan de symétrie P-P de 100° et 20° au repos.

Selon le mode de réalisation particulier et non limitatif des figures 9 et suivantes, les deux facettes 2470 et 2480 radialement internes sont inclinées entre elles de l'ordre de 80°. La facette 2470 est inclinée de 80° par rapport à la facette 248 et de 80° par rapport au plan de symétrie P-P. La facette 2480 est inclinée de 100° par rapport à la facette 247 et généralement parallèle au plan de symétrie P-P.

Chaque lumière 212 formée dans le couvercle 200 et recevant une languette 240 a la forme générale d'un trapèze allongé dans une direction générale transversale au plan de symétrie P-P.

Plus précisément, cette lumière 212 comprend deux faces principales généralement parallèles entre elles et globalement transversales au plan de symétrie P-P, respectivement radialement externe et référencée 2120 et radialement interne et référencée 2123. Chaque lumière 212 comprend également deux faces auxiliaires, respectivement radialement interne référencée 2124 et radialement externe référencée 2126.

Plus précisément, selon la variante représentée sur les figures 9 et suivantes, chaque face principale radialement externe 2120 d'une lumière 212 comprend au moins un tronçon incliné par rapport au flanc secondaire FS, en position de repos du contacteur. La face principale radialement externe 2120 peut être plane sur toute sa longueur.

Cependant selon le mode de réalisation représenté sur les figures 9 et suivantes, cette face principale 2120 radialement externe est formée de deux tronçons plans et adjacents 2121, 2122. Le tronçon 2122 radialement le plus externe et adjacent à la face auxiliaire 2126 radialement externe, plane, définit avec celle-ci un angle au sommet égal à l'ouverture β entre les flancs 143, 144 de chaque encoche 140, soit typiquement 100°.

Par ailleurs en position de repos du contacteur, ce tronçon 2122 est coplanaire du flanc secondaire FS tandis que la face auxiliaire radialement externe 2126 est coplanaire du flanc principal FP de la même encoche.

Le second tronçon 2121 de la face principale 2120 radialement externe converge vers l'axe de rotation O-O en rapprochement du plan de symétrie P-P par rapport au tronçon 2122. Ainsi, les deux tronçons 2121, 2122 forment entre eux un angle obtus D, par exemple de l'ordre de 170°, ouvert vers l'intérieur de la lumière 212.

En variante, la face radialement externe 2120 pourrait être incurvée, concave vers l'intérieur de la lumière 212.

De préférence, la face 2123 est plane et parallèle au tronçon 2122, soit incliné d'environ 80° par rapport au plan de symétrie P-P. La face 2124 est quant à elle plane, inclinée de 80° par rapport à la face 2123, de 110° par rapport au tronçon 2121 et parallèle au plan de symétrie P-P.

On notera que suivant le sens de rotation relatif entre le boîtier 100 et le couvercle 200, les contraintes exercées sur les languettes de verrouillage 240 sont différentes lorsque le contacteur est retiré de son site d'utilisation, soit par exemple avant montage ou à l'occasion d'une opération de maintenance.

Toutefois, le contacteur comprenant deux languettes 240 symétriques par rapport au plan axial P-P, quel que soit le sens de rotation relatif entre le boîtier 100 et le couvercle 200, l'une des deux languettes 240 assure le verrouillage requis.

Lorsque l'élément 118 du boîtier qui comporte les encoches 140 est sollicité à rotation par rapport au couvercle 200 dans le sens contraire des aiguilles d'une montre comme illustré sur les figures 9 et 10 (l'encoche 140 recevant la languette 240 étant déplacée en éloignement du plan de symétrie P-P), le couple de rotation appliqué génère sur la languette 240 un effort F10 qui se décompose en deux efforts F11 et F12 résultant de l'entraînement par friction des faces 247, 248 de la languette 240 respectivement sur les flancs secondaire FS et principal FP de l'encoche 140 correspondante. L'effort F11 parallèle au flanc secondaire FS tend à écarter les languettes 240 du plan de symétrie P-P et favorise par conséquent le verrouillage. Le second effort F12 parallèle au flanc principal FP tend à rapprocher la face 2470 de la languette 240 de la face prinicipale radialement interne 2123 de la lumière 212.

Lorsqu'au contraire, l'élément 118 du boîtier 100 portant les encoches 140 est déplacé dans le sens opposé, soit le sens des aiguilles d'une montre, par rapport au couvercle 200 (l'encoche 140 recevant la languette 240 étant déplacée en rapprochement du plan de symétrie P-P), l'effort F20 exercé sur la languette 240 se décompose en deux efforts F21, F22.

L'effort F21 parallèle au flanc secondaire FS tend à rapprocher les languettes 240 du plan de symétrie P et par conséquent à déverrouiller le contacteur.

L'effort F22 parallèle au flanc principal FP tend à faire suivre la languette 240 dans l'encoche 140.

Une analyse des efforts F11 et F12 mis en jeu, montre que plus l'ouverture angulaire β des encoches 140 est petite, plus les efforts F11 et F12 sont grands (sur la figure 9 les efforts obtenus avec une ouverture de 120° sont esquissés en traits interrompus).

Lors de la rotation dans le sens illustré sur les figures 9 et 10, le flanc secondaire FS de l'encoche vient en contact avec la face 247 de la languette 240 du couvercle, tandis que la face 2470 opposée de la languette 240 vient en contact avec la face principale radialement interne 2123 de la lumière 212 du couvercle (grâce à l'élasticité de l'articulation des languettes 240).

On obtient alors un coincement de la languette 240 entre le flanc secondaire FS de l'encoche et la face 2123 de la lumière 212.

Le déplacement L résultant de la languette 240 par rapport à la face 2120 est égal à la somme du jeu m existant entre la languette 240 et le flanc secondaire FS de l'encoche et du jeu n existant entre la même languette 240 et la face 2123 de la lumière 212.

Ce déplacement L de la languette 240 génère un déplacement, radialement vers l'intérieur, d'une amplitude P, de l'arête radialement extérieure 2400 de la languette 240 (voir figure 10).

Pour obtenir une amplitude P la plus petite possible et garder ainsi une zone de coincement r de la languette 240 la plus grande possible, il est nécessaire de prendre des jeux m et n le plus petit possible.

En pratique, il est souhaitable d'avoir la relation h + m + n inférieur à l, dans laquelle m et n correspondent aux jeux précédemment définis, h est égal à la longueur de la paroi 248 de la languette 240 considérée transversalement à l'axe O-O et l est égal à la longueur correspondante du flanc principal FP de l'encoche.

De même, il est souhaitable de prendre une ouverture β de chaque encoche 140 la plus petite possible, puisque la zone de coincement r est d'autant plus grande que cette ouverture β est petite.

Il est également avantageux selon l'invention d'avoir un engagement entier de la languette 240 dans l'encoche 140 comme on le voit sur les figures annexées.

En outre, le fait de diminuer l'angle d'ouverture β de chaque encoche 140 offre les avantages suivants.

Comme on l'a illustré sur la figure 13, lors du déverrouillage des languettes 240 par sollicitation en rapprochement du plan de symétrie P-P, dans les directions illustrées X1, X2, on provoque simultanément un déplacement forcé, Y en rapprochement de l'axe O-O, des languettes 240 dans leur lumière 212. Ce déplacement Y est d'autant plus important quand, comme indiqué précédemment, la face principale 2120 de la lumière 212 est inclinée en rapprochement vers l'axe O en direction du plan de symétrie P-P. Ainsi, cette face principale 2120 favorise un dégagement U le plus petit possible de la languette 240.

Bien entendu la présente invention n'est pas limitée au mode de réalisation particulier qui vient d'être décrit mais s'étend à toute variante conforme à son esprit.

Ainsi selon le mode de réalisation précité on a envisagé une mise en place initiale et une fixation du contacteur sur le sommet de la colonne de direction de sorte que les languettes 240 sont sollicitées par le volant lors de la mise en place de celui-ci. En variante cependant on peut envisager une mise en place initiale et une fixation du contacteur sur le volant en inversant le contacteur, de sorte que les languettes 240 soient sollicitées par le sommet de la colonne de direction lors de la mise en place du volant sur celle-ci. Le fonctionnement du contacteur reste dans ce cas identique à ce qui a été décrit précédemment y compris pour ce qui est des phases de verrouillage/déverrouillage.

Par ailleurs on peut prévoir d'aménager les languettes de verrouillage 240 sur le boîtier 100 et non pas sur le couvercle 200, voire à la fois sur le boîtier 100 et sur le couvercle 200, ou encore prévoir des languettes anti-jeu 240 sur le boîtier 100 pour supprimer le jeu entre le boîtier 100 et l'organe recevant celui-ci, par exemple le sommet de la colonne de direction, voire prévoir des languettes anti-jeu 240 à la fois sur le boîtier 100 et sur le couvercle 200, de sorte que ces languettes 240 suppriment le jeu entre le boîtier 100, le couvercle 200 et respectivement les organes recevant ceux-ci, soit par exemple le sommet de la colonne de direction pour le boîtier 100 et le volant pour le couvercle 200 ou inversement.

On comprend à la lecture de ce qui précède que le contacteur conforme à la présente invention permet non seulement de supprimer le jeu de fonctionnement entre les éléments du contacteur et les organes qui reçoivent ceux-ci, mais également permet de verrouiller le contacteur dans une position prérèglée, avantageusement dans une position point milieu, dès son assemblage et jusqu'à la pose du volant sur véhicule et permet par la suite, à chaque dépose et pose du volant, d'opérer un verrouillage et un déverrouillage automatique du contacteur, que celui-ci soit fixé sur le volant ou sur le sommet de la colonne de direction et ce quelle que soit l'orientation des roues du véhicule lors de la dépose.

Ainsi grâce à l'invention, le volant du véhicule (voire même le contacteur) peut être démonté et remonté sans précaution particulière quant à l'orientation du train directeur du véhicule, sans risque de détérioration du conducteur souple 300 sur tout l'angle de braquage autorisé.

Par ailleurs le déverrouillage est assuré par le montage du volant sur le véhicule sans intervention manuelle ou autre.

Selon une autre variante de réalisation, les languettes 240 peuvent être formées de pièces initialement indépendantes du couvercle 200 et rapportées ultérieurement sur celui-ci avec possibilité d'articulation.

De même les languettes 240 peuvent être sollicitées vers le boîtier 100 par des moyens ressort rapportés indépendants des zones charnières 242.

La présente invention peut permettre d'éviter l'implantation de butées de courses, classiques, entre le boîtier 100 et le couvercle 200.

## Revendications

1. Contacteur électrique tournant comprenant deux éléments (100, 200) susceptibles de rotation relative et un conducteur souple (300) placé entre ces deux éléments, caractérisé par le fait que les deux éléments (100, 200) sont munis de moyens de verrouillage élastiques (140, 240) complémentaires sollicités en prise, au repos, pour verrouiller les deux éléments (100, 200) en position relative quelconque, et adaptés pour être déverrouillés automatiquement lors de la mise en place du contacteur sur son site d'utilisation afin de libérer automatiquement les deux éléments (100, 200) lors de la mise en place du contacteur.

2. Contacteur selon la revendication 1, caractérisé par le fait que les moyens de verrouillage élastiques complémentaires comprennent des encoches (140) équiréparties autour de l'axe de rotation relative (O-O), sur l'un (100) des deux éléments, et au moins une languette élastique (240) sur l'autre élément (200), ou comprennent des languettes élastiques (240) équiréparties autour de l'axe de rotation (O-O) sur l'un des deux éléments et au moins une encoche (140) sur l'autre élément.

3. Contacteur selon l'une des revendications 1 ou 2, caractérisé par le fait que l'un premier (100) des éléments comprend une couronne d'encoches (140) réparties autour de l'axe de rotation relative (O-O) des deux éléments, tandis que le second élément (200) comprend au moins une languette élastique (240) sollicitée élastiquement au repos vers ladite couronne d'encoches (140) prévue sur le premier élément (100) pour verrouiller en position relative les deux éléments (100, 200), tout en étant adaptée pour être sollicitée en éloignement de cette couronne d'encoches (140) lors de la mise en place du contacteur sur son site d'utilisation afin de libérer automatiquement ces deux éléments (100, 200) lors de la mise en place du contacteur.

4. Contacteur selon l'une des revendications 1 à 3, caractérisé par le fait qu'il comprend deux languettes élastiques (240) symétriques par rapport à un plan axial (P-P) du contacteur.

5. Contacteur selon l'une des revendications 1 à 4, caractérisé par le fait que chaque encoche (140) a la forme d'un dièdre délimité par deux faces planes inclinées (143, 144).

6. Contacteur selon la revendication 5, caractérisé par le fait que l'inclinaison (β) entre deux faces planes (143, 144) d'une même encoche (140) est égale à l'inclinaison entre deux faces extérieures principales (247, 248) de chaque languette (240).

7. Contacteur selon l'une des revendications 5 ou 6, caractérisé par le fait que l'inclinaison (β) entre les deux faces (143, 144) de chaque encoche (140) est supérieure à 90°.

8. Contacteur selon l'une des revendications 5 à 7, caractérisé par le fait que l'inclinaison (β) entre les deux faces (143, 144) de chaque encoche (140) est de l'ordre de 120°.

9. Contacteur selon l'une des revendications 5 à 7, caractérisé par le fait que l'inclinaison (β) entre les deux faces (143, 144) de chaque encoche est de l'ordre de 100°.

10. Contacteur selon l'une des revendications 5 à 9, caractérisé par le fait que les deux faces (143, 144) de chaque encoche (140) sont symétriques par rapport à un plan axial passant par l'axe (O-O) de rotation relative des deux éléments (100, 200).

**11.** Contacteur selon l'une des revendications 1 à 10 prise en combinaison avec les revendications 3 et 4, caractérisé par le fait que les deux languettes élastiques symétriques (240) sont reçues dans des encoches respectives (140) également symétriques par rapport au plan axial (X-X) du contacteur, et que cesdites encoches respectives (140) sont délimitées par des flancs (143, 144, FS) non coplanaires entre eux et inclinés par rapport au plan axial de symétrie (X-X) d'un angle différent de 90°.

**12.** Contacteur selon la revendication 11, caractérisé par le fait que les encoches (140) recevant respectivement les deux languettes symétriques (240) ont des flancs (143, 144, FS) respectifs qui forment entre eux un angle obtus ouvert radialement vers l'extérieur.

**13.** Contacteur selon l'une des revendications 11 ou 12, caractérisé par le fait que lesdits flancs (143, 144) sont inclinés par rapport au plan axial de symétrie (P-P) d'un angle (A) compris entre 60 et 85°, avantageusement entre 70 et 82°, très préférentiellement de l'ordre de 78°.

**14.** Contacteur selon l'une des revendications 1 à 13 prise en combinaison avec la revendication 2, caractérisé par le fait que chaque languette (240) est placée dans une lumière (212) qui possède une face de sollicitation radialement externe (2120) qui converge au moins sur une partie de sa longueur vers l'axe de rotation (O-O), en rapprochement du plan axial de symétrie (P-P).

**15.** Contacteur selon la revendication 14, caractérisé par le fait que ladite face de sollicitation (2120) est au moins en partie non coplanaire d'un flanc (143, 144) d'une encoche associée (140) en position de repos du contacteur.

**16.** Contacteur selon l'une des revendications 14 ou 15, caractérisé par le fait que ladite face de sollicitation (2120) est plane.

**17.** Contacteur selon l'une des revendications 14 ou 15, caractérisé par le fait que ladite face de sollicitation (2120) est formée de deux tronçons adjacents (2121, 2122) dont l'un est sensiblement coplanaire d'un flanc d'une encoche associée (140) en position de repos du contacteur.

**18.** Contacteur selon la revendication 17, caractérisé par le fait que les deux tronçons (2121, 2122) sont inclinés entre eux d'environ 170°.

**19.** Contacteur selon l'une des revendications 1 à 18, caractérisé par le fait que la longueur l de l'un des flancs (143, 144, FP) d'une encoche (140) est supérieure à la somme des jeux (m, n) existant entre une languette (240) et d'une part le second flanc (FS) de la même encoche (140), d'autre part la lumière (212) recevant la languette, et la longueur h de la face (248) de la languette (240) dirigée vers le flanc (FP) premier cité de l'encoche.

**20.** Contacteur selon l'une des revendications 1 à 19, caractérisé par le fait que chaque languette (240) est engagée totalement dans l'encoche correspondante (140).

**21.** Contacteur selon l'une des revendications 1 à 20, caractérisé par le fait qu'il comprend une couronne de 24 encoches (140), présentant chacune une ouverture angulaire de l'ordre de 15°.

**22.** Contacteur selon l'une des revendications 1 à 21, caractérisé par le fait que chaque languette (240) présente une section droite trapézoïdale.

**23.** Contacteur selon l'une des revendications 1 à 22, caractérisé par le fait qu'il est prévu des crans (250) en regard des languettes (240), pour interdire un déplacement radial intempestif des languettes (240) lorsque, en position de verrouillage du contacteur, un couple de rotation (C) est appliqué entre les deux éléments (100, 200).

**24.** Contacteur selon la revendication 23, caractérisé par le fait que les crans (250) sont placés radialement sur l'intérieur des languettes (240).

**25.** Contacteur selon l'une des revendications 1 à 24, caractérisé par le fait que la longueur du conducteur souple (300) est adaptée pour permettre plusieurs décalages successifs d'une demi-encoche entre les deux éléments (100, 200).

**26.** Contacteur selon l'une des revendications 1 ou 25, caractérisé par le fait que chaque languette (240) est adaptée pour supprimer le jeu entre l'élément (200) qui la porte et l'organe associé qui reçoit celui-ci sur le site d'utilisation, par exemple le volant du véhicule automobile.

**27.** Contacteur selon l'une des revendications 1 à 26, caractérisé par le fait que la languette (240) est prévue sur un corps de connecteur (230) lié à l'un des éléments (200).

**28.** Contacteur selon la revendication 27, caractérisé par le fait que le corps de connecteur (230) est formé d'un bloc venu de moulage avec l'élément (200) qui le porte et le corps de connecteur (230) présente une symétrie par rapport à un plan axial.

**29.** Contacteur selon l'une des revendications 27 ou 28, caractérisé par le fait qu'il comprend deux languettes (240) venues de moulage respectivement sur les flancs du corps de connecteur (230).

30. Contacteur selon l'une des revendications 1 à 29, caractérisé par le fait que chaque languette (240) s'étend dans une direction générale axiale.

31. Contacteur selon l'une des revendications 1 à 30, caractérisé par le fait que chaque languette (240) se raccorde sur le sommet d'un corps de connecteur (230) par l'intermédiaire d'une zone d'articulation venue de matière (242) de faible largeur.

32. Contacteur selon la revendication 31, caractérisé par le fait que chaque languette (240) a une longueur supérieure à celle du corps de connecteur (230).

33. Contacteur selon l'une des revendications 1 à 32, caractérisé par le fait que chaque languette (240) traverse, libre de déplacement, une plaque de base (210) de l'élément (200) qui la porte, au niveau d'une lumière (212) formée dans celle-ci.

34. Contacteur selon la revendication 33, caractérisé par le fait que chaque languette (240) s'étend au delà de la plaque de base (210).

35. Contacteur selon l'une des revendications 1 à 34, caractérisé par le fait que chaque languette (240) est munie d'une rampe de sollicitation (244).

36. Contacteur selon la revendication 35, caractérisé par le fait que les rampes de sollicitation (244) divergent par rapport au plan de symétrie en rapprochement de la plaque de base (210).

37. Contacteur selon l'une des revendications 1 à 36, caractérisé par le fait qu'il est prévu au moins une languette (240) sur un couvercle pivotant (200) du contacteur.

38. Contacteur selon l'une des revendications 1 à 37, caractérisé par le fait qu'il est prévu au moins une languette (240) sur un boîtier fixe (100) du contacteur.

39. Contacteur selon l'une des revendications 1 à 37, caractérisé par le fait qu'il est prévu au moins une languette (240) sur un couvercle pivotant (200) du contacteur et au moins une languette (240) sur un boîtier fixe (100) du contacteur.

40. Contacteur selon l'une des revendications 1 à 39, caractérisé par le fait que la languette (240) est formée d'une pièce initialement indépendante et rapportée ultérieurement avec possibilité d'articulation.

41. Contacteur selon l'une des revendications 1 à 40, caractérisé par le fait que la languette (240) est sollicitée par des moyens ressorts rapportés indépendants.

42. Contacteur selon l'une des revendications 1 à 41, caractérisé par le fait qu'il est adapté pour assurer un déplacement de la languette élastique (240) et un déverrouillage du contacteur par le montage d'un volant sur un véhicule automobile sans intervention manuelle ou autre.

**Claims**

1. Rotary electrical contactor comprising two elements (100, 200) capable of relative rotation and a flexible conductor (300) placed between these two elements, characterized in that the two elements (100, 200) are fitted with complementary elastic locking means (140, 240), urged into engagement at rest, to lock the two elements (100, 200) at any relative position, and designed to be automatically unlocked when the contactor is installed in its place of use so as to automatically release the two elements (100, 200) when the contactor is installed.

2. Contactor according to Claim 1, characterized in that the complementary elastic locking means comprise notches (140) distributed uniformly about the axis of relative rotation (O-O) on one (100) of the two elements, and at least one elastic tab (240) on the other element (200), or comprise elastic tabs (240) uniformly distributed about the axis of rotation (O-O) on one of the two elements and at least one notch (140) on the other element.

3. Contactor according to one of Claims 1 and 2, characterized in that a first (100) of the elements comprises a ring of notches (140) distributed about the axis of relative rotation (O-O) of the two elements, while the second element (200) comprises at least one elastic tab (240) urged elastically at rest towards the said ring of notches (140) provided on the first element (100) so as to lock the two elements (100, 200) in a relative position while at the same time being designed to be urged away from this ring of notches (140) when the contactor is installed in its place of use, so as to automatically release these two elements (100, 200) when the contactor is installed.

4. Contactor according to one of Claims 1 to 3, characterized in that it comprises two elastic tabs (240) which are symmetric with respect to an axial plane (P-P) of the contactor.

5. Contactor according to one of Claims 1 to 4, characterized in that each notch (140) is in the shape of a dihedron delimited by two inclined flat faces (143, 144).

6. Contactor according to Claim 5, characterized in that the inclination (β) between two flat faces (143, 144) of one same notch (140) is equal to the inclination between two main outer faces (247, 248) of each tab (240).

7. Contactor according to one of Claims 5 and 6, characterized in that the inclination (β) between the two faces (143, 144) of each notch (140) is greater than 90°.

8. Contactor according to one of Claims 5 to 7, characterized in that the inclination (β) between the two faces (143, 144) of each notch (140) is of the order of 120°.

9. Contactor according to one of Claims 5 to 7, characterized in that the inclination (β) between the two faces (143, 144) of each notch is of the order of 100°.

10. Contactor according to one of Claims 5 to 9, characterized in that the two faces (143, 144) of each notch (140) are symmetric with respect to an axial plane passing through the axis (0-0) of relative rotation of the two elements (100, 200).

11. Contactor according to one of Claims 1 to 10, taken in combination with Claims 3 and 4, characterized in that the two symmetric elastic tabs (240) are received in respective notches (140) which are also symmetric with respect to the axial plane (X-X) of the contactor, and that these said respective notches (140) are delimited by flanks (143, 144, FS) which are not coplanar and which are inclined with respect to the axial plane of symmetry (X-X) by an angle other than 90°.

12. Contactor according to Claim 11, characterized in that the notches (140) respectively receiving the two symmetric tabs (240) have respective flanks (143, 144, FS) which form between them an obtuse angle facing radially outwards.

13. Contactor according to one of Claims 11 and 12, characterized in that the said flanks (143, 144) are inclined with respect to the axial plane of symmetry (P-P) by an angle (A) of between 60 and 85°, advantageously between 70 and 82°, most preferably of the order of 78°.

14. Contactor according to one of Claims 1 to 13, taken in combination with Claim 2, characterized in that each tab (240) is placed in a slot (212) which has a radially outer urging face (2120) which, over at least part of its length, converges towards the axis of rotation (O-O), becoming closer to the axial plane of symmetry (P-P).

15. Contactor according to Claim 14, characterized in that the said urging face (2120) is at least partially not coplanar with a flank (143, 144) of an associated notch (140) when the contactor is in a position of rest.

16. Contactor according to one of Claims 14 and 15, characterized in that the said urging face (2120) is flat.

17. Contactor according to one of Claims 14 and 15, characterized in that the said urging face (2120) is formed of two adjacent portions (2121, 2122), one of which is substantially coplanar with a flank of an associated notch (140) when the contactor is in a position of rest.

18. Contactor according to Claim 17, characterized in that the two portions (2121, 2122) are inclined by about 170° with respect to each other.

19. Contactor according to one of Claims 1 to 18, characterized in that the length l of one of the flanks (143, 144, FP) of a notch (140) is greater than the sum of the clearances (m, n) there are between a tab (240) and, on the one hand, the second flank (FS) of the same notch (140) and, on the other hand, the slot (212) receiving the tab, and the length h of the face (248) of the tab (240) pointing towards the first mentioned flank (FP) of the notch.

20. Contactor according to one of Claims 1 to 19, characterized in that each tab (240) is fully engaged in the corresponding notch (140).

21. Contactor according to one of Claims 1 to 20, characterized in that it comprises a ring of 24 notches (140), each enclosing an angle of the order of 15°.

22. Contactor according to one of Claims 1 to 21, characterized in that each tab (240) has a trapezoidal cross section.

23. Contactor according to one of Claims 1 to 22, characterized in that there are steps (250) facing the tabs (240) to prevent inadvertent radial displacement of the tabs (240) when, with the contactor in the locked position, a relative torque (C) is applied to the two elements (100, 200).

24. Contactor according to Claim 23, characterized in that the steps (250) are placed radially on the inside of the tabs (240).

25. Contactor according to one of Claims 1 to 24, characterized in that the length of the flexible conductor (300) is adapted to allow the two elements (100, 200) to be offset successively by half a notch several times.

26. Contactor according to one of Claims 1 and 25, characterized in that each tab (240) is adapted to eliminate the clearance between the element (200) which bears it and the associated member which receives it at the place of use, for example the steering wheel of the motor vehicle.

27. Contactor according to one of Claims 1 to 26, characterized in that the tab (240) is provided on a connector body (230) connected to one of the elements (200).

28. Contactor according to Claim 27, characterized in that the connector body (230) is formed of a block moulded integrally with she element (200) which bears it and the connector body (230) exhibits symmetry with respect to an axial plane.

29. Contactor according to one of Claims 27 and 28, characterized in that it comprises two tabs (240) respectively moulded integrally on the flanks of the connector body (230).

30. Contactor according to one of Claims 1 to 29, characterized in that each tab (240) extends in an axial overall direction.

31. Contactor according to one of Claims 1 to 30, characterized in that each tab (240) is connected to the top of a connector body (230) by way of a narrow integrally-formed articulation region (242).

32. Contactor according to Claim 31, characterized in that each tab (240) is longer than the connector body (230).

33. Contactor according to one of Claims 1 to 32, characterized in that each tab (240) passes, with freedom to move, through a baseplate (210) of the element (200) which bears it, at a slot (212) formed in this baseplate.

34. Contactor according to Claim 33, characterized in that each tab (240) extends beyond the baseplate (210).

35. Contactor according to one of Claims 1 to 34, characterized in that each tab (240) has an urging ramp (244).

36. Contactor according to Claim 35, characterized in that the urging ramps (244) diverge with respect to the plane of symmetry, coming closer to the baseplate (210).

37. Contactor according to one of Claims 1 to 36, characterized in that there is at least one tab (240) on a pivoting cover (200) of the connector.

38. Contactor according to one of Claims 1 to 37, characterized in that there is at least one tab (240) on a stationary housing (100) of the contactor.

39. Contactor according to one of Claims 1 to 37, characterized in that there is at least one tab (240) on a pivoting cover (200) of the contactor and at least one tab (240) on a stationary housing (100) of the contactor.

40. Contactor according to one of Claims 1 to 39, characterized in that the tab (240) is formed of a part which was initially independent and was later attached with the possibility of articulation.

41. Contactor according to one of Claims 1 to 40, characterized in that the tab (240) is urged by independent attached spring means.

42. Contactor according to one of Claims 1 to 41, characterized in that it is designed to allow the elastic tab (240) to be shifted and the contactor to be unlocked by mounting a steering wheel on a motor vehicle without manual or other intervention.

**Patentansprüche**

1. Elektrischer Drehschalter mit zwei Elementen (100, 200), welche in relativer Drehung beweglich sind, und einem zwischen diesen beiden Elementen angeordneten biegsamen Leiter (300), dadurch gekennzeichnet, daß die beiden Elemente mit komplementären elastischen Verriegelungsvorrichtungen (140, 240) ausgestattet sind, welche in Eingriff in der Ruhestellung beansprucht werden, um die beiden Elemente (100, 200) in irgendeiner relativen Position zu verriegeln, und welche dafür eingerichtet sind, während der Anordnung des Schalters an seiner Einsatzstelle automatisch entriegelt zu werden, um die beiden Elemente (100, 200) während der Anordnung des Schalters automatisch freizugeben.

2. Schalter gemäß Anspruch 1, dadurch gekennzeichnet, daß diese komplementären elastischen Verriegelungsvorrichtungen auf dem einen der beiden Elemente (100) um die relative Drehachse (0-0) gleichmäßig verteilte Einkerbungen (140) und wenigstens eine elastische Lasche (240) auf dem anderen Element (200) aufweisen oder sie auf dem einen der beiden Elemente um die relative Drehachse (0-0) gleichmäßig verteilte elastische Laschen und wenigstens eine Einkerbung (140) auf dem anderen Element aufweisen.

3. Schalter gemäß einem der Ansprüche 1 oder 2, dadurch gekennzeichnet, daß das erste (100) der Elemente einen Kranz mit Einkerbungen (140) aufweist, welche um die relative Drehachse (0-0) der beiden Elemente verteilt sind, während das zweite Element (200) wenigstens eine elastische Lasche (240) aufweist, welche in Ruhestellung zu dem auf dem ersten Element (100) vorgesehenen Kranz mit Einkerbungen (140) hin elastisch beansprucht wird, um die beiden Elemente (100, 200) in relativer Position zu verriegeln, wobei sie dafür eingerichtet ist, während der Anordnung des Schalters an seiner Einsatzstelle so beansprucht zu werden, daß sie von dem Einkerbungskranz (140) weggezogen wird, um diese beiden Elemente (100, 200) während der Anordnung des Schalters automatisch freizugeben.

4. Schalter gemäß einem der Ansprüche 1 bis 3, dadurch gekennzeichnet, daß er zwei bezüglich einer axialen Ebene (P-P) des Schalters symmetrische elastische Laschen (240) aufweist.

5. Schalter gemäß einem der Ansprüche 1 bis 4, dadurch gekennzeichnet, daß jede Einkerbung (140) die Form eines Dieders hat, welches von zwei geneigten, ebenen Flächen (143, 144) begrenzt ist.

6. Schalter gemäß Anspruch 5, dadurch gekennzeichnet, daß die Neigung ($\beta$) zwischen zwei ebenen Flächen (143, 144) einer gleichen Einkerbung (140) gleich der Neigung zwischen zwei äußeren Hauptflächen (247, 248) jeder Lasche (240) ist.

7. Schalter gemäß einem der Ansprüche 5 oder 6, dadurch gekennzeichnet, daß die Neigung ($\beta$) zwischen den beiden Flächen (143, 144) jeder Einkerbung (140) größer als 90° ist.

8. Schalter gemäß einem der Ansprüche 5 bis 7, dadurch gekennzeichnet, daß die Neigung ($\beta$) zwischen den beiden Flächen (143, 144) jeder Einkerbung (140) in der Größenordnung von 120° liegt.

9. Schalter gemäß einem der Ansprüche 5 bis 7, dadurch gekennzeichnet, daß die Neigung ($\beta$) zwischen den beiden Flächen (143, 144) jeder Einkerbung in der Größenordnung von 100° liegt.

10. Schalter gemäß einem der Ansprüche 5 bis 9, dadurch gekennzeichnet, daß die beiden Flächen (143, 144) jeder Einkerbung (140) bezüglich einer durch die relative Drehachse (0-0) der beiden Elemente (100, 200) laufenden axialen Ebene symmetrisch sind.

11. Schalter gemäß einem der Ansprüche 1 bis 10 in Kombination mit den Ansprüchen 3 und 4, dadurch gekennzeichnet, daß die beiden symmetrischen, elastischen Laschen (240) in jeweiligen Einkerbungen (140), welche ebenfalls bezüglich der axialen Ebene (X-X) des Schalters symmetrisch sind, aufgenommen werden, und daß die jeweiligen Einkerbungen (140) von zueinander nicht koplanaren und bezüglich der axialen Symmetrieebene (X-X) um einen von 90° abweichenden Winkel geneigten Flanken (143, 144, FS) begrenzt sind.

12. Schalter gemäß Anspruch 11, dadurch gekennzeichnet, daß die Einkerbungen (140), welche jeweils die beiden symmetrischen Laschen (240) aufnehmen, jeweilige Flanken (143, 144, FS) aufweisen, welche zwischen sich einen stumpfen Winkel bilden, welcher radial nach außen geöffnet ist.

13. Schalter gemäß einem der Ansprüche 11 oder 12, dadurch gekennzeichnet, daß die Flanken (143, 144) bezüglich der axialen Symmetrieebene (P-P) um einen Winkel (A) zwischen 60 und 85°, vorteilhafterweise zwischen 70 und 82° und sehr bevorzugt in der Größenordnung von 78° geneigt sind.

14. Schalter gemäß einem der Ansprüche 1 bis 13 in Kombination mit dem Anspruch 2, dadurch gekennzeichnet, daß jede Lasche (240) in einem Schlitzloch (212) angeordnet ist, welches eine radial nach außen gerichtete Beanspruchungsfläche (2120) besitzt, welche wenigstens über einen Teil ihrer Länge zu der Drehachse (0-0) hin, in Annäherung zu der axialen Symmetrieebene (P-P), konvergiert.

15. Schalter gemäß Anspruch 14, dadurch gekennzeichnet, daß die Beanspruchungsfläche (2120) wenigstens teilweise nicht koplanar mit einer Flanke (143, 144) einer zugeordneten Einkerbung (140) in der Ruheposition des Schalters ist.

16. Schalter gemaß einem der Ansprüche 14 oder 15, dadurch gekennzeichnet, daß die Beanspruchungsfläche (2120) eben ist.

17. Schalter gemäß einem der Ansprüche 14 oder 15, dadurch gekennzeichnet, daß die Beanspruchungsfläche (2120) von zwei anstoßenden Teilstücken (2121, 2122) gebildet ist, von denen das eine praktisch koplanar mit einer Flanke einer zugeordneten Einkerbung (140) in der Ruheposition des Schalters ist.

18. Schalter gemäß Anspruch 17, dadurch gekennzeichnet, daß die beiden Teilstücke (2121, 2122) zueinander um ungefähr 170° geneigt sind.

19. Schalter gemäß einem der Ansprüche 1 bis 18, dadurch gekennzeichnet, daß die Länge l der einen der Flanken (143, 144, FP) einer Einkerbung (140) größer ist als die Summe der Spiele (m, n), welche zwischen einer Lasche (240) und einerseits der zweiten Flanke (FS) derselben Einkerbung (140) und andererseits dem die Lasche aufnehmenden Schlitzloch (212) bestehen, und als die Länge h der Fläche (248) der Lasche (240), welche zu der zuerst genannten Flanke (FP) der Einkerbung hin gerichtet ist.

20. Schalter gemäß einem der Ansprüche 1 bis 19, dadurch gekennzeichnet, daß jede Lasche (240) vollständig in die entsprechende Einkerbung (140) eingeschoben ist.

21. Schalter gemäß einem der Ansprüche 1 bis 20, dadurch gekennzeichnet, daß er einen Kranz mit 24 Einkerbungen (140) aufweist, welche jeweils eine Winkelöffnung in der Größenordnung von 15° aufweisen.

22. Schalter gemäß einem der Ansprüche 1 bis 21, dadurch gekennzeichnet, daß jede Lasche (240) einen trapezförmigen Querschnitt aufweist.

23. Schalter gemäß einem der Ansprüche 1 bis 22, dadurch gekennzeichnet, daß Ausschnitte (250) gegenüber den Laschen (240) vorgesehen sind, um eine ungewollte radiale Verschiebung der Laschen (240) zu verhindern, wenn in Verriegelungsposition des Schalters ein Drehmoment () zwischen den beiden Elementen (100, 200) angelegt wird.

24. Schalter gemäß Anspruch 23, dadurch gekennzeichnet, daß die Ausschnitte (250) radial zu dem Inneren der Laschen (240) hin angeordnet sind.

25. Schalter gemäß einem der Ansprüche 1 bis 24, dadurch gekennzeichnet, daß die Länge des biegsamen Leiters (300) dafür eingerichtet ist, mehrere aufeinanderfolgende Versetzungen um eine halbe Einkerbung zwischen den beiden Elementen (100, 200) zu ermöglichen.

26. Schalter gemaß einem der Ansprüche 1 oder 25, dadurch gekennzeichnet, daß jede Lasche (240) dafür eingerichtet, das Spiel zwischen dem Element (200), welches sie trägt, und dem zugeordneten Organ, welches dieses an der Einsatzstelle, beispielsweise dem Lenkrad des Kraftfahrzeuges, aufnimmt, zu verhindern.

27. Schalter gemäß einem der Ansprüche 1 bis 26, dadurch gekennzeichnet, daß die Lasche (240) auf einem mit einem der Elemente (200) verbundenen Steckverbindungskörper (230) vorgesehen ist.

28. Schalter gemäß Anspruch 27, dadurch gekennzeichnet, daß der Steckverbindungskörper (230) von einem Block gebildet ist, welcher durch Formpressen mit dem Element (200), welches ihn trägt, ausgebildet wurde, und däß der Steckverbindungskörper (230) bezüglich einer axialen Ebene eine Symmetrie aufweist.

29. Schalter gemäß einem der Ansprüche 27 oder 28, dadurch gekennzeichnet, daß er zwei Laschen (240) aufweist, welche jeweils durch Formpressen auf den Flanken des Steckverbindungskörpers (230) ausgebildet worden sind.

30. Schalter gemäß einem der Ansprüche 1 bis 29, dadurch gekennzeichnet, daß sich jede Lasche 240 in eine allgemeine axiale Richtung erstreckt.

31. Schalter gemäß einem der Ansprüche 1 bis 30, dadurch gekennzeichnet, daß sich jede Lasche (240) mittels eines Gelenkbereiches, welcher aus Material (242) mit geringer Breite hergestellt ist, an die Spitze eines Steckverbindungskörpers (230) anschließt.

32. Schalter gemäß Anspruch 31, dadurch gekennzeichnet, daß jede Lasche (240) eine größere Länge als der Steckverbindungskörper (230) hat.

33. Schalter gemäß einem der Ansprüche 1 bis 32, dadurch gekennzeichnet, daß jede Lasche (240) eine Basisplatte (210) des Elementes (200), welches sie trägt, auf der Ebene einer in dieser gebildeten Schlitzloches (212) verschiebungsfrei durchquert.

34. Schalter gemaß Anspruch 33, dadurch gekennzeichnet, daß sich jede Lasche (240) über die Basisplatte (210) hinaus erstreckt.

35. Schalter gemäß einem der Ansprüche 1 bis 34, dadurch gekennzeichnet, daß jede Lasche (240) mit einer Beanspruchungsschräge (244) ausgestattet ist.

36. Schalter gemäß Anspruch 35, dadurch gekennzeichnet, daß die Beanspruchungsschrägen (244) bezüglich der Symmetrieebene in Annäherung an die Basisplatte (210) divergieren.

37. Schalter gemäß einem der Ansprüche 1 bis 36, dadurch gekennzeichnet, daß wenigstens eine Lasche (240) auf einem schwenkbaren Deckel (200) des Schalters vorgesehen ist.

38. Schalter gemäß einem der Ansprüche 1 bis 37, dadurch gekennzeichnet, daß wenigstens eine Lasche (240) auf einem festen Gehäuse (100) des Schalters vorgesehen ist.

39. Schalter gemäß einem der Ansprüche 1 bis 38, dadurch gekennzeichnet, daß wenigstens eine Lasche (240) auf einem schwenkbaren Deckel (200) des Schalters und wenigstens eine Lasche (240) auf einem festen Gehäuse (100) des Schalters vorgesehen ist.

40. Schalter gemäß einem der Ansprüche 1 bis 39, dadurch gekennzeichnet, daß die Lasche (240) aus einem anfänglich unabhängigen Teil gebildet ist, welches nachträglich mit einer Schwenkmöglichkeit befestigt wird.

41. Schalter gemäß einem der Ansprüche 1 bis 40, dadurch gekennzeichnet, daß die Lasche (240) von einzelabgefederten, aufgesetzen Federvorrichtungen beansprucht wird.

42. Schalter gemäß einem der Ansprüche 1 bis 41, dadurch gekennzeichnet, daß er dafür eingerichtet ist, eine Verschiebung der elastischen Lasche (240) und eine Entriegelung des Schalters durch den Einbau eines Lenkrades in ein Kraftfahrzeug ohne manuelles oder anderes Eingreifen sicherzustellen.

FIG_1

FIG_2

FIG. 3

FIG_4

FIG. 5

FIG. 6

143  144  140·  - 118 -

143

247

241  144

248

200

249

250

FIG_7

FIG_8

EP 0 704 345 B1

FIG_9

FIG_10

EP 0 704 345 B1

FIG_11

FIG_12

FIG.13

EP 0 704 345 B1

FIG.14